# EUROPEAN PATENT APPLICATION

(11) **EP 3 462 783 A1**
(43) Date of publication of application: **03.04.2019**
(21) Application number: 16906656.0
(22) Date of filing: 29.06.2016
(51) Int. Cl.: H04W 48/16

(54) **ACCESS METHOD, USER EQUIPMENT, CONTROL DEVICE, AND COMMUNICATION SYSTEM**

(71) Applicant: Huawei Technologies Co., Ltd., Longgang District Shenzhen, Guangdong 518129 (CN)
(72) Inventor: DENG, Tianle, Shenzhen Guangdong 518129 (CN); WANG, Man, Shenzhen Guangdong 518129 (CN)
(74) Representative: Epping - Hermann - Fischer
(86) International application number: PCT/CN2016/087726
(87) International publication number: WO 2018/000255

(57) **Abstract**

Embodiments of the present invention provide an access method, user equipment, a control device, and a communications system. The control device or the UE determines an access network device that is suitable for access by the UE, avoiding signaling exchanges between a target access network device and a source access network device, reducing signaling exchanges between the UE and a network side, and thereby ensuring a short access time and saving network resources. Especially in a dense network scenario, for example, in a C-RAN, according to the access method provided in the embodiments of the present invention, the UE can be quickly handed over between different cells, ensuring a short handover period and service continuity of the UE during frequent handovers.

## Description

### TECHNICAL FIELD

Embodiments of the present invention relate to the field of communications technologies, and in particular, to an access method, a user equipment, a control device, and a communications system.

### BACKGROUND

Handover (HO, handover) is an important technology in the field of wireless communications, and ensures that a user equipment (user equipment, UE) can perform communication continuously in a moving process.

A Long Term Evolution (LTE, Long Term Evolution) system is used as an example. A handover process in the prior art includes: A source base station (source base station) determines, based on a measurement report sent by a UE, whether the UE need to be handed over; after determining that the UE needs to be handed over, the source base station sends a handover request (Handover Request) to a target base station (target base station); after receiving the handover request, the target base station feeds back a handover request acknowledgment (Handover Request Acknowledgment) to the source base station; then the UE sends an access request to the target base station by using a dedicated preamble; the target base station allocates temporary identification information to the UE and performs contention resolution; the UE subsequently modifies the temporary identification information to formal identification information and completes an RRC connection setup process; after the UE access succeeds, the target base station sends a resource release (UE Context Release) message to the source base station.

In the foregoing handover process, a large amount of signaling is exchanged between the source base station and the target base station, and between the base stations and the UE, thereby leading to a long access period and large resource consumption.

### SUMMARY

Embodiments of the present invention provide an access method, user equipment, a control device, and a communications system.

According to a first aspect, an embodiment of the present invention provides an access method, including:
sending, by a UE, an access request message to at least one access network device; receiving, by the UE, an access response message sent by one or more of the at least one access network device for the access request message; determining, by the UE based on the access response message, a first access network device that is suitable for access by the UE, where the first access network device is one of the at least one access network device; and accessing, by the UE, the first access network device.

According to the access method provided in this embodiment of the present invention, the UE determines the access network device that is suitable for access by the UE, avoiding signaling exchanges between a target access network device and a source access network device, reducing signaling exchanges between the UE and a network side, and thereby ensuring a short access time and saving network resources.

In a possible implementation, the accessing, by the UE, the first access network device includes: sending, by the UE, UE identification information to the first access network device, where the UE identification information includes at least one of an identifier of the UE, an identifier of the first access network device, and an identifier of the control device.

In a possible implementation of the first aspect, the UE determines the first access network device based on resource block allocation information included in the access response message. In a possible implementation of the first aspect, the UE determines the first access network device based on a timing advance (time advance, TA) included in the access response message. In a possible implementation of the first aspect, the method further includes: detecting, by the UE, a signal condition of a source access network device; and when the signal condition of the source access network device meets a preset condition, retaining, by the UE, a connection to the source access network device; or when the signal condition of the source access network device does not meet the preset condition, breaking, by the UE, the connection to the source access network device.

In a possible implementation of the first aspect, before the sending, by UE, an access request message to at least one access network device, the method further includes: determining, by the UE based on a determining condition, whether an access network device needs to be switched; where the determining condition includes at least one of the following: the signal condition of the source access network device of the UE, a signal condition of an access network device adjacent to the source access network device, a change of a geographical location of the UE, and a distance between the UE and each of the at least one access network device. A signal condition includes signal quality and/or signal strength.

In a possible implementation of the first aspect, the access request message includes a dedicated preamble or a contention preamble, where the dedicated preamble is allocated to the UE by the at least one access network device or the control device.

In a possible implementation of the first aspect, the method further includes: receiving, by the UE, access response messages sent by a plurality of access network devices that are managed by at least two control devices.

According to a second aspect, to implement the access method in the first aspect, an embodiment of the present invention provides a UE, and the UE has a function for implementing UE behavior in the foregoing access method. The function may be implemented by hardware, or may be implemented by hardware executing corresponding software. The hardware or software includes one or more modules corresponding to the foregoing function.

In a possible implementation of the second aspect, the UE includes a plurality of function modules, configured to implement any access method in the first aspect, so that the UE determines an access network device that is suitable for access by the UE, avoiding signaling exchanges between a target access network device and a source access network device, and reducing signaling exchanges between the UE and a network side, and thereby ensuring a short access time and saving network resources.

In a possible implementation of the second aspect, a structure of the UE includes a processor and a transceiver. The processor is configured to support the UE in implementing a corresponding function in the foregoing access method. The transceiver is configured to support communication between the UE and an access network device, and send, to the access network device, the information or instruction used in the foregoing access method. The UE may further include a memory, and the memory is configured to couple to the processor, and stores a program instruction and data that are necessary for the UE.

According to a third aspect, an embodiment of the present invention provides an access method, including:
receiving, by a control device, an access request message sent by at least one access network device, where the at least one access network device is managed by the control device; and
sending, by the control device, an instruction message to one or more of the at least one access network device, to instruct the one or more access network devices to send an access response message to the UE, where the access response message is used by the UE to determine a first access network device that is suitable for access.

In a possible implementation of the third aspect, the access request message is a contention preamble, and the method further includes: when receiving a same contention preamble of a plurality of user equipments, performing, by the control device, contention resolution for access requests of the plurality of user equipments.

In a possible implementation of the third aspect, the method further includes: receiving, by the control device, a data status indication message from a source access network device, where the data status indication message includes a start number of a data packet that has not been transmitted between the UE and the source access network device.

According to a fourth aspect, to implement the access method in the third aspect, an embodiment of the present invention provides a control device, and the control device has a function for implementing control device behavior in the foregoing access method. The function may be implemented by hardware, or may be implemented by hardware executing corresponding software. The hardware or software includes one or more modules corresponding to the foregoing function.

According to a fifth aspect, an embodiment of the present invention provides an access method, including:
receiving, by a control device, an access request message sent by at least one access network device, where the control device manages the at least one access network device; determining, by the control device from the at least one access network device based on the access request message, a first access network device that is suitable for access by a user equipment UE; and sending, by the control device, an instruction message to the first access network device, where the instruction message is used to instruct the first access network device to send an access response message to the UE.

In a possible implementation of the fifth aspect, the control device determines the first access network device based on a signal condition of the access request message.

In a possible implementation of the fifth aspect, the control device obtains a distance between the UE and each of the at least one access network device; and the control device determines the first access network device based on the distance.

The control device can determine the distance between the UE and the access network device based on sending delay information of the access request message, where the sending delay information is recorded by the access network device and sent to the control device.

In a possible implementation of the fifth aspect, the control device obtains, from the access request message, a quantity of resources preallocated to the UE; and the control device determines the first access network device based on the quantity of resources preallocated to the UE.

In a possible implementation of the fifth aspect, the method further includes: receiving, by the control device, a data status indication message from a source access network device, where the data status indication message includes a start number of a data packet that has not been transmitted between the UE and the source access network device.

In a possible implementation of the fifth aspect, the access request message includes a contention preamble; and the receiving, by a control device, an access request message sent by at least one access network device includes: receiving, by the control device, contention preambles sent by a plurality of access network devices, where the contention preambles are the same as contention preambles sent by a plurality of UEs; and the method further includes: performing, by the control device, contention resolution for access requests of the plurality of UEs; and determining, by the control device, a processing priority of the access requests of the plurality of UEs.

According to a sixth aspect, to implement the access method in the fifth aspect, an embodiment of the present invention provides a control device, and the control device has a function for implementing control device behavior in the foregoing access method. The function may be implemented by hardware, or may be implemented by hardware executing corresponding software. The hardware or software includes one or more modules corresponding to the foregoing function.

In a possible implementation of the sixth aspect, the control device includes a plurality of function modules, configured to implement any access method in the first aspect, so that the control device determines an access network device that is suitable for access by a UE, avoiding signaling exchanges between a target access network device and a source access network device, reducing signaling exchanges between the UE and a network side, and thereby ensuring a short access time and saving network resources.

In a possible implementation of the sixth aspect, a structure of the control device includes a processor and a transceiver. The processor is configured to support the control device in implementing a corresponding function in the foregoing access method. The transceiver is configured to support communication between the control device and an access network device, and send, to the access network device, the information or instruction used in the foregoing access method. The control device may further include a memory. The memory is configured to couple to the processor, and stores a program instruction and data that are necessary for the control device.

According to a seventh aspect, an embodiment of the present invention provides an access method, including:
sending, by a UE, an access request message to at least one access network device, where the access request message is used, by a control device that manages the access network device, to determine a first access network device that is suitable for access by the UE, and the first access network device is one of the at least one access network device;
receiving, by the UE, an access response message sent by the first access network device; and
accessing, by the UE, the first access network device.

In a possible implementation of the seventh aspect, the accessing, by the UE, the first access network device includes: sending, by the UE, UE identification information to the first access network device, where the UE identification information includes at least one of an identifier of the UE, an identifier of the first access network device, and an identifier of the control device.

In a possible implementation of the seventh aspect, before the sending, by UE, an access request message to at least one access network device, the method further includes: determining, by the UE based on a determining condition, whether an access network device needs to be switched; where the determining condition includes at least one of the following: the signal condition of the source access network device of the UE, a signal condition of an access network device adjacent to the source access network device, a change of a geographical location of the UE, and a distance between the UE and each of the at least one access network device.

In a possible implementation of the seventh aspect, the method further includes: detecting, by the UE, a signal condition of a source access network device; and when the signal condition of the source access network device meets a preset condition, retaining a connection to the source access network device; or when the signal condition of the source access network device does not meet the preset condition, breaking the connection to the source access network device. According to an eighth aspect, to implement the access method in the seventh aspect, an embodiment of the present invention provides a UE, and the UE has a function for implementing UE behavior in the foregoing access method. The function may be implemented by hardware, or may be implemented by hardware executing corresponding software. The hardware or software includes one or more modules corresponding to the foregoing function.

According to a ninth aspect, an embodiment of the present invention provides a communications system. The system includes the control device and the UE in the foregoing aspects, and at least one access network device.

According to a tenth aspect, an embodiment of the present invention provides a computer storage medium, configured to store a computer software instruction used by the foregoing control device, where the computer storage instruction includes a program designed for executing the foregoing aspects.

According to an eleventh aspect, an embodiment of the present invention provides a computer storage medium, configured to store a computer software instruction used by the foregoing UE, where the computer software instruction includes a program that is designed for executing the foregoing aspects.

The foregoing access method is applicable to a cloud radio access network (C-RAN, cloud radio access network), the control device is a C-RAN control node (CC, C-RAN controller), and the access network device is a remote node (RN, remote node) in the C-RAN. In the C-RAN, cell intensity is high, and handovers of a UE are frequent. According to the access method provided in the embodiments of the present invention, the UE can be quickly handed over between different cells. This ensures a short handover period, reduces network loads, improves overall network efficiency, and ensures service continuity of the UE during frequent handovers.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

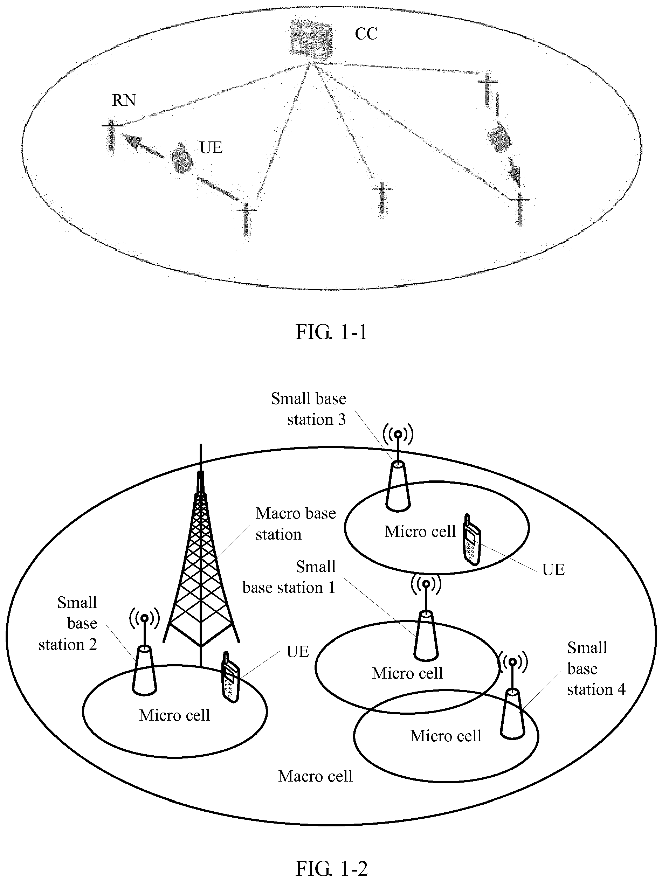

FIG. 1-1 is a schematic diagram of an application scenario according to an embodiment of the present invention;
FIG. 1-2 is a schematic diagram of another application scenario according to an embodiment of the present invention;
FIG. 2 is a schematic flowchart of an access method according to an embodiment of the present invention;
FIG. 3 is a schematic flowchart of an access method according to an embodiment of the present invention;
FIG. 4 is a schematic flowchart of an access method according to an embodiment of the present invention;
FIG. 5 is a schematic flowchart of an access method according to an embodiment of the present invention;
FIG. 6 is a schematic flowchart of an access method according to an embodiment of the present invention;
FIG. 7 is a schematic structural diagram of a UE according to an embodiment of the present invention;
FIG. 8 is a schematic structural diagram of a control device according to an embodiment of the present invention;
FIG. 9 is a schematic structural diagram of another control device according to an embodiment of the present invention;
FIG. 10 is a schematic structural diagram of another UE according to an embodiment of the present invention;
FIG. 11 is a schematic diagram of a possible design structure of a UE according to an embodiment of the present invention;
FIG. 12 is a schematic diagram of a possible design structure of a control device according to an embodiment of the present invention; and
FIG. 13 is a schematic diagram of a communications system according to an embodiment of the present invention.

### DESCRIPTION OF EMBODIMENTS

The technology described in the specification may be applied to various communications systems, for example, a 2G system such as a Global System for Mobile Communications (Global System for Mobile Communications, GSM), a 3G system such as a Wideband Code Division Multiple Access (Wideband Code Division Multiple Access, WCDMA) system, a 4G system such as a Long Term Evolution (Long Term Evolution, LTE) system, an LTE-evolved 5G communications system, and a communications system that integrates a wireless local area network (WLAN, wireless local area network) with a cellular network.

A macro base station in embodiments of the present invention may be a base transceiver station (Base Transceiver Station, BTS) in GSM, may be a NodeB (NodeB) in WCDMA, may be an evolved NodeB (eNB or e-NodeB, evolved Node B) in LTE, or a similar base station device in a 5G communications system.

A small base station in the embodiments of the present invention includes but is not limited to the following: a micro base station (micro base station), a pico base station (pico base station), a femto base station (femto base station), and an access point (access point, AP). This is not limited in the embodiments of the present invention.

In the embodiments of the present invention, a concept of a communications network is equivalent to a concept of a communications system, and the communications system is used for description in the embodiments of the present invention.

A UE in the embodiments of the present invention may include handheld devices with a wireless communication function, in-vehicle devices, wearable devices, computing devices, or other processing devices connected to a wireless modem, and various forms of user equipments, mobile stations (mobile station, MS), terminals (terminal), terminal devices (terminal equipment), and the like. For ease of description, in this application, these devices are referred to as "user equipments" or "UEs".

In the embodiments of the present invention, a unidirectional communications link from a base station to a UE is defined as a downlink, and a unidirectional communications link from a UE to a base station is defined as an uplink.

Resources described in the embodiments of the present invention are transmission resources including time domain resources and frequency domain resources, and may be used to carry data or signaling in an uplink communication process or a downlink communication process. That is, resources described in the embodiments of the present invention may be uplink resources allocated by a base station for the UE to send uplink data, or may be downlink resources allocated by a base station for the UE to receive downlink data.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification indicates an "or" relationship between the associated objects.

The term "a plurality of' in the embodiments of the present invention means two or more than two. The descriptions "first", "second", and the like in the embodiments of the present invention are used merely to indicate and distinguish the described objects, but are not intended to indicate a specific order or specific limitations on a quantity of devices in the embodiments of the present invention, and do not constitute any limitation on the embodiments of the present invention.

FIG. 1-1 is a schematic diagram of an application scenario according to an embodiment of the present invention.

Technical solutions provided in this embodiment of the present invention may be applicable to a cloud radio access network (C-RAN, cloud-radio access network). The C-RAN is a new radio access network architecture. Using the C-RAN for network deployment facilitates application of technologies such as an ultra dense network, coordinated multipoint transmission, and an amorphous cell. The C-RAN may serve as a deployment mode of the 5G communications network.

As shown in FIG. 1-1, the C-RAN may include a remote node (RN, remote node), and a C-RAN control node (CC, C-RAN controller) that manages the RN. The CC may also be referred to as a centralized unit (centralized unit, CU) and the RN may also be referred to as a distributed unit (distributed unit, DU). The CC and the RN are two logically independent function entities. That is, the CC and the RN may be two function entities located within a same device, or may be two independent devices located at different geographical locations. When located at different geographical locations, the CC and each RN can be connected in a wireless or a wired manner, for example, a microwave manner or an optical fiber connection manner. A combination of the CC and the RN has a complete base-station function. That is, the CC or the RN has some base-station functions or all base-station functions. Specifically, the RN has at least a radio frequency function, and the CC has at least a radio resource control (Radio Resource Control, RRC) function. For example, the CC has functions of a Packet Data Convergence Protocol (PDCP, Packet Data Convergence Protocol) layer or above. For example, the RN has a radio frequency function, and the CC has functions of a physical layer or above. The CC implements in a centralized manner physical-layer data processing such as encoding, modulation, and multi-antenna mapping. Alternatively, the RN has a radio frequency function and a physical-layer function, and the CC has functions of a media access control (MAC, Media Access Control) layer or above. Different RNs share a same MAC layer at the CC, to implement joint data scheduling or a fast UE handover.

Because the RN has at least a radio frequency function, the RN can receive an uplink signal from a UE that enters a coverage area of the RN, and send a downlink signal to a UE that is located in the coverage area of the RN. A coverage area of each RN may be referred to as a cell, and a coverage area of the CC may be considered as a super cell/hyper cell (Super cell/Hyper cell) including one or more cells. A cell that is accessed by a UE and that is managed by the RN may be referred to as a local cell (local cell) of the UE, and a cell adjacent to the local cell is a neighboring cell or a neighbor cell (neighbor cell)

After the UE moves into a coverage area of a CC, the UE can access a corresponding RN based on a determining condition such as signal strength and a geographical location. That is, the UE can directly communicate with the RN and the CC implements communication management for the UE by using the RN.

In addition to the C-RAN scenario, the technical solutions provided in this embodiment of the present invention may also be applicable to a plurality of networking scenarios, such as a scenario in which a UE is handed over from one small base station to another small base station in a communications network including a macro base station and a small base station ("macro/micro networking" for short), or a scenario in which a UE is handed over from one macro base station to another macro base station in a network in which macro base stations collaboratively communicate with each other ("macro/macro networking" for short). This is not limited in this embodiment of the present invention.

It may be understood that the base stations in the foregoing networking scenarios may be of a same RAT, or may be of different RATs. For example, in the macro/micro networking scenario, both the macro base station and the small base station may be base stations of an LTE standard; or the macro base station is a base station of an LTE standard and the small base station is a base station of an evolved LTE standard, such as a small base station that uses a 5G communications technology. For example, in the macro/macro networking scenario, each macro base station may be an eNB, or a macro base station that uses a 5G communications technology, and any two macro base stations are neighboring base stations.

FIG. 1-2 is a schematic diagram of another application scenario according to an embodiment of the present invention.

A communications network shown in FIG. 1-2 includes a macro base station. In a coverage area (coverage area) of the macro base station, four independent small base stations are deployed, including a small base station 1, a small base station 2, ..., and a small base station 4. The small base stations are communicatively connected to the macro base station. In this embodiment of the present invention, the coverage area of the macro base station is referred to as a macro cell (macro cell), and is used to meet UE requirements for mobility and seamless coverage. As a supplement to the macro base station coverage, the small base stations are responsible for user data transmission in a particular area in the macro cell, such as a blind spot or an edge area. A relatively small hotspot area that is covered by a small base station and that is in the macro cell is referred to as a small cell or a micro cell (small cell/micro cell). After a UE enters the macro cell, the UE may first access the macro base station, and a control plane is established on the macro base station. Then, the UE may access one or more small base stations under the macro base station, and transmit some or all service data by using the small base stations. Similar to an RN in the C-RAN, the small base station may have only some low-layer protocol stack functions, and high-layer protocol stack functions are implemented by the macro base station.

It can be understood that in either a C-RAN scenario or a macro/micro networking scenario, one CC or macro base station has a plurality of cells, and therefore cell density is high, and handovers of a UE are frequent. Service continuity of the UE during frequent handovers needs to be maintained. In addition, a coverage area of the CC or the macro base station is relatively large, and there may be a coverage vulnerability. It is expected to improve network efficiency and a system throughput by improving an access method. Therefore, how to perform quick UE handovers between ultra dense cells or between amorphous cells is a problem that needs to be resolved urgently.

The access method provided in this embodiment of the present invention is applicable to a communications network including a control device and at least one access network device. The control device is communicatively connected to each of the at least one access network device. A communication connection manner is not specifically limited in this embodiment of the present invention. The communication connection may be a wired connection or a wireless connection. The control device in this embodiment of the present invention means a device that establishes a communication connection to the access network device and manages the access network device, so as to implement unified control and management on communication with a UE in a coverage area. A type of the control device is not specifically limited in this embodiment of the present invention. For example, in the C-RAN network, the control device may be a CC; and in the macro/micro networking scenario, the control device may be a macro base station. Particularly, in a 5G high/low frequency scenario, the control device may be a low-frequency macro base station. The 5G high/low frequency scenario means a networking scenario in which a 5G low-frequency macro base station and a 5G high-frequency small base station coexist. In a 5G non-independent deployment scenario, the control device may be an LTE macro base station. The 5G non-independent deployment scenario means a networking scenario in which an LTE macro base station and a 5G small base station coexist, and a control plane is established on the LTE macro base station.

In this embodiment of the present invention, the access network device has at least a radio frequency function, is managed by the control device, and forms a complete base station function with the control device. The UE can access the communications network by establishing a connection to the access network device, so as to transmit service data. A type of the access network device is not specifically limited in this embodiment of the present invention. For example, in the C-RAN network, the access network device may be an RN; and in the macro/micro networking scenario, the access network device may be a small base station.

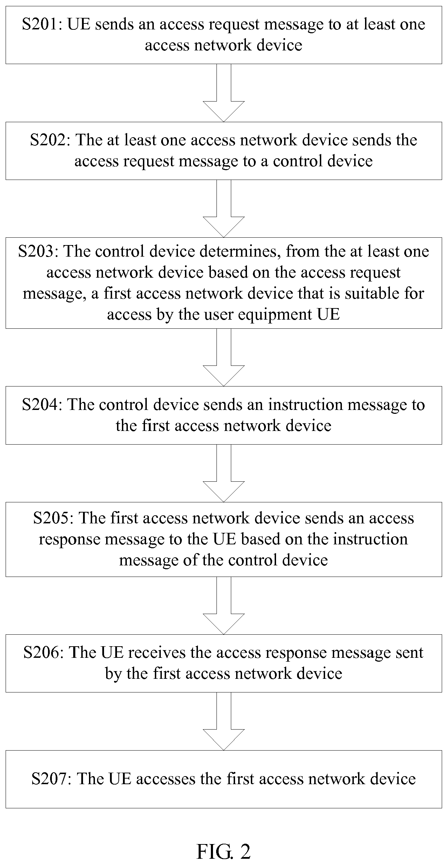

FIG. 2 is an access method according to an embodiment of the present invention. As shown in FIG. 2, the method includes steps S201 to S207.

S201: A UE sends an access request message to at least one access network device.

Specifically, the UE may send the access request message to any access network device that is in a signal transmission range, to request for access.

Optionally, the access network device receiving the access request message may be managed by one control device, or may be managed by a plurality of control devices. This is not specifically limited in this embodiment of the present invention. For ease of description, in this embodiment, it is assumed that the at least one access network device is managed by a same control device. Optionally, before sending the access request message, the UE determines whether the access network device needs to be switched. Specifically, the UE can determine, based on at least one determining condition such as a signal condition of a source access network device, a signal condition of an access network device adjacent to the source access network device, a change of a geographical location of the UE, or a distance between the UE and each of the at least one access network device, whether the UE needs to be handed over to another access network device, so as to initiate a handover procedure. Further, if a current received signal strength measured by the UE is less than a threshold, or a current UE moving speed is greater than a threshold, the UE may send the access request message to the access network device. The UE can direct detect the signal conditions of the source access network device or the adjacent access network device. Alternatively, the UE can read a measurement report of a local cell or an adjacent cell to obtain the signal conditions of the source access network device or the adjacent access network device. It can be understood that the determining condition is merely an example, and does not constitute any limitation on this embodiment of the present invention.

Optionally, a signal condition in this embodiment of the present invention includes signal quality and/or signal strength. The UE can determine, based on signal quality, signal strength, or a combination of signal quality and signal strength of the source access network device or the adjacent access network device, whether the access network device needs to be switched. The signal strength means power of a signal that is sent by the access network device and that is received by the UE, and the signal quality means a signal interference level. If the UE receives a signal with high signal strength and a good quality, a communication speed of the UE may reach or approach a peak value, so that a network side can allocate an optimal communications resource to the UE.

Specifically, the signal strength may be represented by a reference signal received power (reference signal received power, RSRP), and the signal quality may be represented by any one or more of a signal to interference plus noise ratio (signal to interference plus noise ratio, SINR), a reference signal received quality (reference signal received quality, RSRQ), and a channel quality indicator (channel quality indicator, CQI).

Optionally, a contention preamble or a dedicated preamble may be specifically used for the access request message. The UE may send the contention preamble or the dedicated preamble to one or more access network devices that are in the signal transmission range. The dedicated preamble is allocated to the UE by the one or more access network devices or the control device, and may be delivered to the UE by broadcasting. The contention preamble may be used by UE with no dedicated preamble allocated. It should be noted that when the UE is in an initial access process, that is, when the UE currently does not access any access network device, the UE uses the contention preamble to initiate an access request.

S202: The at least one access network device sends the access request message to a control device.

S203: The control device determines, from the at least one access network device based on the access request message, a first access network device that is suitable for access by the user equipment UE.

It can be understood that the first access network device is one or more of the access network device that sends the access request message to the control device.

Specifically, the control device can determine the first access network device based on a preset determining condition, for example, based on a condition such as a signal transmission quality of the access network device, a resource usage status of the access network device, an overall resource scheduling status of a network, a distance between the UE and the access network device, and a motion direction and a speed of the UE. It can be understood that the conditions enumerated above may be used alone, or may be used in a combination. A specific method for the control device to determine the first access network device is not specifically limited in this embodiment of the present invention.

Optionally, in another implementation of the present invention, when the control device receives the access request message sent by an access network device, the control device can determine whether the access network device is suitable for access by the UE. Specifically, the control device can obtain a received signal level of the access network device based on the signal strength of the access request message, compares the received signal level of the access network device with a preset level threshold, and when the received signal level is greater than or equal to the level threshold, determines the access network device as the first access network device. When the received signal level is less than the level threshold, the access network device is not suitable for access by the UE. Optionally, the control device can alternatively determine, based on a distance between the UE and the access network device or a resource usage status of the access network device, whether the access network device may be accessed by the UE.

S204: The control device sends an instruction message to the first access network device.

The instruction message is used to instruct the first access network device to send an access response message to the UE.

S205: The first access network device sends an access response message to the UE based on the instruction message of the control device.

S206: The UE receives the access response message sent by the first access network device.

S207: The UE accesses the first access network device.

Specifically, after receiving the access response message sent by the first access network device, or in a process of a UE accessing the first access network device, the UE may send UE identification information to the first access network device. The UE identification information in this embodiment of the present invention includes a plurality of types of information used for identifying UE, and can be used by the first access network device or the control device to confirm security and validity of the UE.

Optionally, the UE identification information includes at least one of an identifier of the UE, an identifier of the first access network device, and an identifier of the control device. Further, the UE identification information may further include an identifier of the source access network device and/or an identifier of a source control device, where the source access network device means an access network device in which the UE currently resides or to which the UE is connected before the handover is completed, and the source control device means a control device that manages the source access network device. To be distinguished from the source control device, the foregoing control device may be alternatively referred to as a target control device, configured to manage an access network device to which the UE attempts to be handed over. Correspondingly, the foregoing first access network device may be alternatively referred to as a target access network device. When the UE is handed over under a same control device, the source control device and the target control device are a same device; when the UE is handed over under different control devices, the source control device and the target control device are two different devices. After the first access network device successfully receives the UE identification information, it indicates that the access is completed.

It should be pointed out that the identifier of the UE, the identifier of the access network device, and the identifier of the control device are all system-generated or system-allocated. The identifier of the UE may be allocated by the control device or a network side when the UE initially accesses a network, or may be obtained in a subsequent reconfiguration process; the identifier of the access network device is allocated by the control device, and the identifier of the control device is allocated by the network side.

Optionally, in the scenario in which the UE is handed over between different access network devices under a same control device, the UE identification information includes the identifier of the UE and the identifier of the first access network device. Specifically, after receiving the access response message, the UE can send, to the first access network device, the UE identification information including the identifier of the UE and the identifier of the first access network device. Alternatively, the UE directly sends the UE identification information to the control device. Optionally, the UE identification information further includes the identifier of the source access network device.

Optionally, in the scenario in which the UE is handed over between different control devices, the UE identification information includes the identifier of the UE, the identifier of the first access network device, and the identifier of the control device. Specifically, after receiving the access response message, the UE can send, to the first access network device, the UE identification information including the identifier of the UE, the identifier of the first access network device, and the identifier of the control device. Alternatively, the UE directly sends the UE identification information to the control device. Optionally, the UE identification information further includes the identifier of the source control device and the identifier of the source access network device. Optionally, in any of the foregoing handover scenarios, the UE can further send the corresponding UE identification information to the source access network device, to be used for subsequent data forwarding.

Optionally, in an implementation of the present invention, the control device may determine two or more than two first access network devices. That is, when more than one access network device meets an access condition determined by the control device for the UE, the UE can sequentially determine, based on an access response message fed back by each of the at least one access network device, whether the access network device is suitable for access. When the UE determines that an access network device is suitable for access, the UE accesses the access network device. Optionally, the UE may select to access a first access network device that has a strongest signal or that is closest to the UE. Alternatively, the UE can simultaneously access a plurality of first access network devices that meet a signal reception condition set by the UE. The control device and the UE jointly determine an access network device that is suitable for access by the UE, further improving accuracy of a decision result.

According to the access method provided in this embodiment of the present invention, the control device determines the access network device that is suitable for access by the UE, avoiding signaling exchanges between the target access network device and the source access network device, reducing signaling exchanges between the UE and a network side, and thereby ensuring a short access time and saving network resources. Especially, if the access method provided in this embodiment of the present invention is used in a dense network scenario such as the C-RAN, the UE can be quickly handed over between different cells. This ensures a short handover period, reduces network loads, improves overall network efficiency, and ensures service continuity of the UE during frequent handovers.

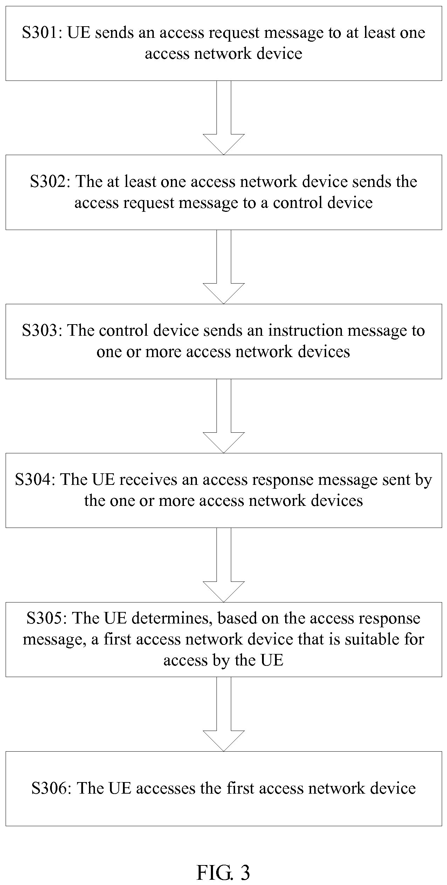

FIG. 3 is an access method according to an embodiment of the present invention. As shown in FIG. 3, the method includes steps S301 to S306.

S301: A UE sends an access request message to at least one access network device.

For specific descriptions of S301, refer to S201. Details are not described herein again.

Optionally, before performing S301, the UE may determine whether the access network device needs to be switched. For a specific determining condition and a determining process, refer to related descriptions in the embodiment shown in FIG. 2. Details are not described herein again. S302: An access network device that receives the access request message sent by the UE in the at least one access network device sends the access request message to a control device.

S303: The control device sends an instruction message to one or more access network devices. The message is used to instruct the one or more access network devices to send an access response message to the UE.

It can be understood that the "one or more access network devices" mean some or all devices in the at least one access network device. Specifically, the control device may send the instruction information to each of the at least one access network device, or may send the instruction information to some access network devices. A method of selecting an access network device by the control device is not specifically limited in this embodiment of the present invention, provided that the control device determines that the access network device meets a basic access condition of the UE, for example, a signal transmission quality of an access network or a quantity of idle resources reaches a threshold.

S304: The UE receives an access response message sent by the one or more access network devices.

Optionally, in an embodiment of the present invention, the one or more access network devices may be separately managed by a plurality of control devices.

S305: The UE determines, based on the access response messages, a first access network device that is suitable for access by the UE.

The first access network device is one of the at least one access network device.

A specific method for the UE to determine the first access network device is not specifically limited in this embodiment of the present invention. The UE can perform determining based on a preset determining condition, for example, based on at least one condition of a signal transmission quality of an access network device, a measurement report of a cell in which the UE is located or an adjacent cell, a distance between the UE and the access network device, a resource usage status of the access network device, a speed of feeding back an access response message by the access network device, and a motion direction or speed of the UE.

Optionally, in another implementation of the present invention, when the UE receives the access response message sent by an access network device, the UE can determine whether the access network device is suitable for access. For example, the UE can obtain a distance between the UE and the access network device based on the access response message, compare the distance with a preset distance threshold, and when the distance between the UE and the access network device is less than the distance threshold, determine the access network device as the first access network device; or when the distance between the UE and the access network device is less than the distance threshold, determine that the access network device is not suitable for access by the UE.

S306: The UE accesses the first access network device.

Specifically, after receiving the access response message sent by the first access network device, or in a process of a UE accessing the first access network device, the UE may send UE identification information to the first access network device. For specific content and a sending process of the UE identification information, refer to related content of the embodiment shown in FIG. 2. Details are not described herein again.

According to the access method provided in this embodiment of the present invention, the UE determines the access network device that is suitable for access by the UE, avoiding signaling exchanges between a target access network device and a source access network device, reducing signaling exchanges between the UE and a network side, and thereby ensuring a short access time and saving network resources. Especially, if the access method provided in this embodiment of the present invention is used in a dense network scenario such as the C-RAN, the UE can be quickly handed over between different cells. This ensures a short handover period, reduces network loads, improves overall network efficiency, and ensures service continuity of the UE during frequent handovers. In addition, the access network device selected by the UE meets a communications condition of the UE, and therefore, an access effect is good.

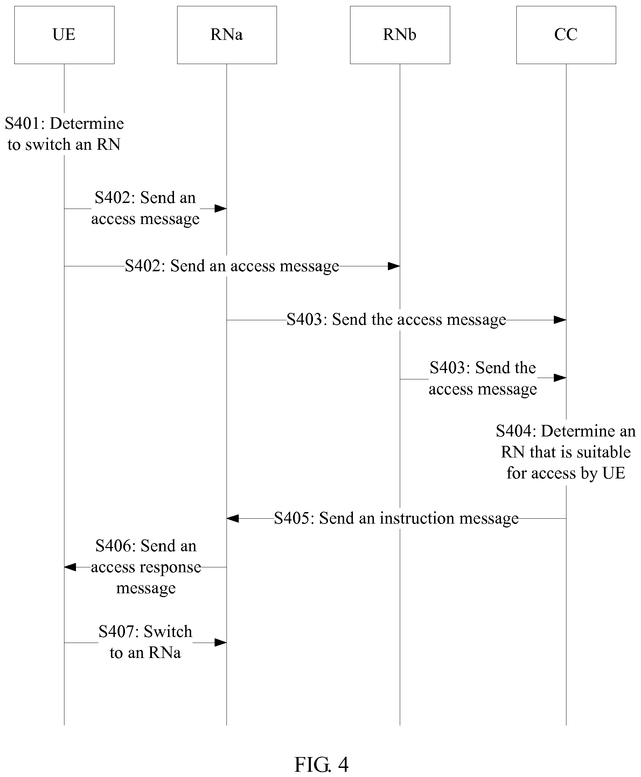

The following introduces the access method provided in the embodiments of the present invention by using the C-RAN scenario as an example, that is, describes the access method provided in the embodiments of the present invention by using a CC as the control device, and using an RN as the access network device. It can be understood that the embodiments shown in FIG. 4 to FIG. 6 are based on the embodiments shown in FIG. 2 to FIG. 3, and are further explanations and descriptions of the access method provided in the embodiments of the present invention. The embodiments provided in the present invention may be mutually referenced.

FIG. 4 is an access method according to an embodiment of the present invention. The access method may be applicable to UE handovers between different RNs under a same CC.

In this embodiment, it is assumed that the CC manages an RN in which UE currently resides or to which the UE is currently connected (hereinafter referred to as a "source RN"), and other two RNs (hereinafter referred to as an "RNa" and an "RNb").

The method includes steps S401 to S407.

S401: A UE determines to switch an RN.

Optionally, the UE determines, by detecting a signal condition of a source RN, or based on a change of a physical location of the UE, that the UE needs to be handed over to an RN with a better signal condition.

S402: The UE sends an access request message.

The access request message may be a contention preamble, that is, the UE accesses the RN in a contention manner; or the access request message may be a dedicated preamble, that is, the UE accesses the RN in a non-contention manner.

Specifically, the contention preamble may be broadcast by the RN or broadcast by the CC, obtained by the UE through contention, and may be used by UE with no dedicated preamble allocated. Specifically, contention preambles in different RNs may be the same, and may be pre-coordinated by the CC. Alternatively, a contention preamble in an RN is the same as a contention preamble in a random access process in an LTE system, and follows an LTE contention preamble allocation mechanism. Optionally, the contention preamble is suitable for static or low-mobility UE.

The dedicated preamble may be directly allocated to the RN by the CC. A dedicated preamble allocated to each RN may be the same, and the UE can obtain the dedicated preamble from a source RN. Optionally, the dedicated preamble is suitable for high-mobility UE, so as to reduce an overall access time.

S403: An RN receiving the access request message sent by the UE sends the access request message to the CC.

Specifically, there are dense cells under the CC. Therefore, the access request message sent by the UE may be received by a plurality of RNs, for example, is simultaneously received by the RNa and the RNb. It indicates that the RNa and the RNb both meet a basic access condition of the UE, including that geographical locations are relatively close to the UE, signals are relatively strong, and so on. The RNs send the received access request message to the CC, so that the CC further determines an RN that is suitable for access by the UE.

S404: The CC determines, based on the received access request message, an RN that is suitable for access by the UE.

Optionally, the CC can determine, based a signal condition of the access request message sent by the RN, including signal strength and/or signal quality, the RN that is suitable for access by the UE. For example, the CC can detect the signal strength of the access request message, obtain received signal levels of RNs, that is, obtain signal transmission qualities of the RNs, and select, based on the received signal level, an RN that is suitable for access by the UE. The CC can compare the received signal levels of the RNs, and uses an RN with a largest received signal level as an RN to be accessed by the UE; or the CC can set a received signal level threshold, compare the received signal levels of the RNs with the threshold, and uses an RN with a received signal level above the threshold as an RN to be accessed by the UE.

Optionally, the CC can obtain distances between the UE and the RNa and the RNb, and determine an RN that is suitable for access by the UE based on the distances between the UE and the RNs. Specifically, the CC can select an RN for the UE based on the distances between the UE and RNs. Similar to the received signal level, the CC can compare the distances between the UE and each of the RNs, and selects a relatively close RN; or set a distance threshold, compare the distances between the UE and the RNs with the threshold. Details are not described herein again. A method for the CC to obtain a distance between the UE and each RN may be: The CC obtains sending delay information of access request messages sent by the RNa and the RNb, where the sending delay information includes a delay of sending the access request message to an RN by the UE. The CC can determine the distance between the UE and the RN based on the sending delay information. Optionally, the sending delay information may be recorded by the RNa or the RNb, and sent to the CC; or be determined by the CC based on a receiving delay of the access request message. This is not limited herein.

Optionally, the CC can obtain, from the access request message, a quantity of resources preallocated to the UE, and determine, based on the quantity of resources, the RN that is suitable for access by the UE. Specifically, the CC can, based on a resource request status of UE, allocate UE requesting a large quantity of resources to a relatively idle RN for access, and allocate UE requesting a small quantity of requested resources to an RN with a relatively small quantity of idle resources, for access. In this way, resources can be appropriately allocated and UE communications quality can be improved. A preallocated resource means a resource that is preallocated to the UE by a network side. The UE carries the quantity of preallocated resources in the access request message, so as to request the CC to allocate a corresponding quantity of resources to the UE. Alternatively, the quantity of preallocated resources is preallocated to the UE by an RN, and notified to the CC by the RN. The CC determines, based on the quantity of preallocated resources, which RN to be accessed by the UE.

It can be understood that the RN selection methods enumerated above may be used alone, or may be used in any combination to enhance determining accuracy. This is not limited in this embodiment of the present invention.

S405: The CC sends an instruction message to the determined RN.

In this embodiment, it is assumed that the RN determined by the CC is the RNa. The CC sends the instruction message to the RNa, to instruct the RNa to send an access response message to the UE.

S406: The RNa sends an access response message to the UE.

Specifically, the access response message may be a random access response (RAR, random access response) message. The RAR message may include a timing advance (TA, time advance), resource block (RB, resource block) allocation information, and uplink grant (UL grant) information, where the TA can reflect the distance between the UE and the RN, and the RB allocation information can reflect an initial uplink resource allocation status.

Optionally, when the UE performs access in a contention manner, that is, by sending the contention preamble, the RAR message may further include a radio network temporary identifier (T-RNTI, Temporary-Radio Network Temporary Identifier), to be used for contention resolution between UEs.

S407: The UE accesses the RNa.

Specifically, after receiving the access response message, the UE can send a C-RAN identity (C-RAN identity, C-RAN ID) and a UE identity (UE identity, UE ID) to the RNa. Receiving, by the RNa, the C-RAN ID and the UE ID sent by the UE indicates that the UE completes the access process. The C-RAN ID is C-RAN identification information, and is in a correspondence relationship with identification information of the CC in the C-RAN. Different C-RANs are represented by using different C-RAN IDs, and the C-RAN ID is allocated by the network side. The UE ID is a UE-specific ID. An ID of each UE in each C-RAN is unique, and can be denoted by using one or more continuous bits.

Optionally, in another embodiment of the present invention, after the UE accesses the RNa, if network coverage is good, the UE can retain a connection to the source RN in a dual connectivity (DC, dual connectivity) manner, to ensure that the UE maintains a high-quality connection to the network. Specifically, the UE can detect a signal condition of the source RN. When the signal condition of the source RN meets a preset condition, the UE retains the connection to the source RN. Optionally, when the UE detects that the signal condition of the source RN does not meet the preset condition, the UE may break the connection to the source RN, that is, the UE is completely handed over from the source RN to the RNa. A signal condition may be signal quality and/or signal strength. For example, the UE detects signal quality of a transmission signal of the source RN, and when the signal quality meets a preset condition, the UE retains the connection to the source RN; or when the signal condition does not meet the preset condition, the UE breaks the connection to the source RN.

Optionally, in another embodiment of the present invention, when the CC receives contention preambles sent by a plurality of UEs, the CC can perform contention resolution for access requests of the plurality of UEs. A contention means that a plurality of UEs use a same contention preamble to access a same RN or a plurality of RNs under a same CC. A contention resolution method is not limited in this embodiment of the present invention. For example, the CC may determine which UE access request is to be processed first. Specifically, the CC can determine, based on a single factor or a combination of a plurality of factors such as a UE-reported channel quality, a position of the UE relative to the RN, and a UE service emergency level, a UE access sequence or a processing sequence of access requests. For another example, the UE can scramble, by using the T-RNTI carried in the RAR message, the UE identification information to be sent to the RNa, including separately scrambling various identifiers included in the UE identification information, such as the UE ID. After receiving the scrambled UE identification information sent by a plurality of UEs, the RNa or the CC selects one UE ID, and sends a contention resolution message to UE corresponding to the UE ID, where the contention resolution message includes the selected UE ID. After receiving the contention resolution message, the UE compares the selected UE ID with UE ID of the UE. If the selected UE ID is the same as the UE ID of the UE, it indicates that the UE access succeeds and the contention is resolved. It can be understood that the CC may also use other various contention resolution methods. Details are not described herein again.

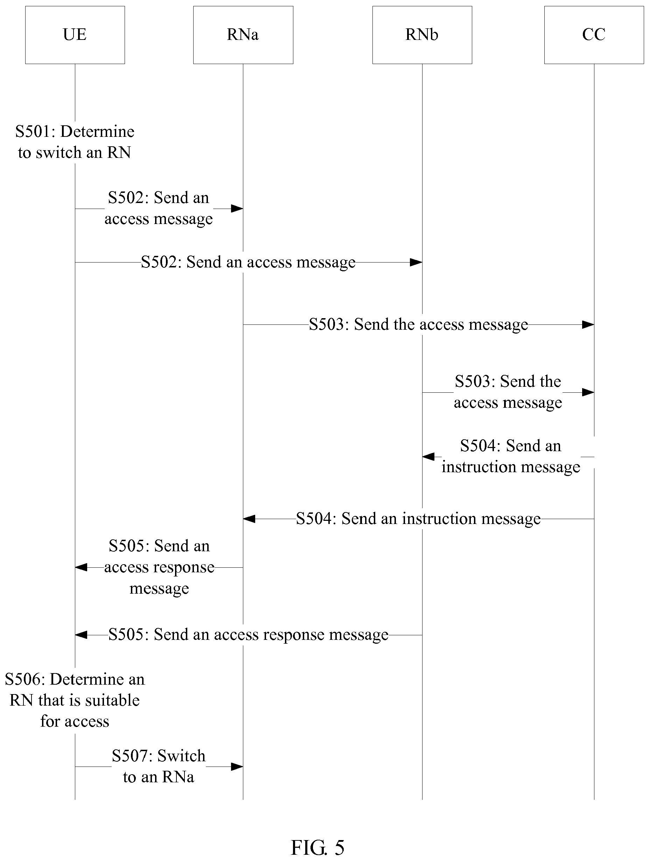

FIG. 5 is an access method according to an embodiment of the present invention. The access method may be applicable to UE handovers between different RNs under a same CC.

Similar to the embodiment shown in FIG. 4, in this embodiment, it is assumed that the CC manages three RNs, including a source RN in which a UE currently resides or to which the UE is currently connected, an RNa, and an RNb.

The method includes steps S501 to S507.
S501: A UE determines to switch an RN.
S502: The UE sends an access request message.
S503: An RN receiving the access request message sent by the UE sends the access request message to the CC.

For detailed descriptions of S501 to S503, refer to steps S401 to S403. Details are not described herein again.

In this embodiment, it is assumed that the RNa and the RNb separately receive the access request message sent by the UE.

S504: The CC sends instruction messages to the RNa and the RNb.

Specifically, after successfully receiving the access request message forwarded by the RNa and the RNb, the CC sends the instruction messages to the RNa and the RNb, to instruct the RNa and the RNb to send access response messages to the UE.

S505: The RNa and the RNb separately send access response messages to the UE.

Specifically, the access response messages may include TA and RB allocation information. If a contention preamble is used for access, a UE T-RNTI is further included and used as a temporary identifier of the UE for subsequent contention resolution. For a detailed description about contention resolution, refer to related content in the embodiment shown in FIG. 4. Details are not described herein again.

S506: The UE determines, based on the received access response messages, an RN that is suitable for access.

Optionally, the UE may obtain resource usage statuses of RNs based on RB allocation information in the RAR message, to determine which RN is relatively idle and select a relatively idle RN for access.

Optionally, the UE can determine, based on a TA in the RAR message, distances between the UE and the RNs, and selects an RN that is relatively close to the UE for access.

In addition, the UE may also select, based on a speed of feeding back access response messages by the RNs, an RN that feeds back an access response message in a relatively timely manner, for access.

It can be understood that the RN selection methods enumerated above may be used alone, or may be used in any combination to enhance determining accuracy. This is not limited in this embodiment of the present invention.

In this embodiment, it is assumed that the RNa is an RN that is finally determined by the UE. S507: The UE accesses the RNa.

For a detailed description of S507, refer to step S407. Details are not described herein again. Optionally, the UE can determine, by detecting a signal condition of the source RN, whether to retain a connection to the source RN. For a specific process, refer to related descriptions in other embodiments of the present invention. Details are not described herein again.

Optionally, in another embodiment of the present invention, after obtaining access request messages forwarded by different RNs, the CC can determine which RNs suitable for access by the UE. That is, the CC selects, based on a determining condition, a quantity of RNs from RNs that send access request messages to the CC, and sends instruction messages to these RNs, to instruct these RNs to send access response messages to the UE. The UE selects a to-be-accessed RN from these RNs. Optionally, the CC can obtain received signal levels of the RNs based on signal strengths of the access request messages, so as to select an RN with a relatively high received signal level or with a received signal level reaching a threshold. Alternatively, an RN may be determined based on the distances between the UE and the RNs.

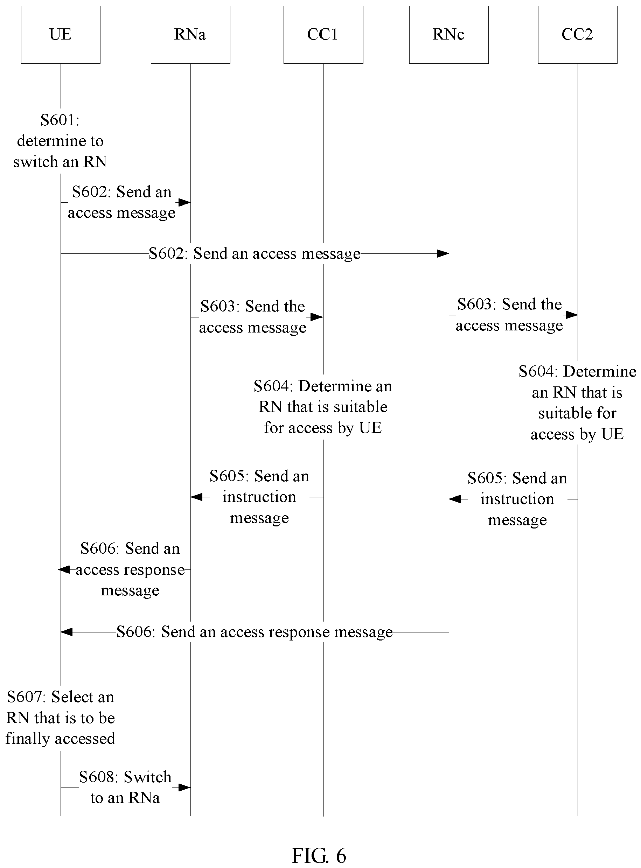

FIG. 6 is an access method according to an embodiment of the present invention. The access method may be applicable to UE handovers between RNs under different CCs. In this embodiment, it is assumed that the UE is located within coverage areas of both a CC1 and a CC2. The CC1 covers an RNa and an RNb, and the CC2 covers an RNc and an RNd. The UE is currently connected to or resides in a source RN. The source RN may belong to the CC1 or the CC2, or may belong to another CC. This is not specifically limited in this embodiment.

The method includes steps S601 to S608.
S601: A UE determines to switch an RN.
S602: The UE sends an access request message.

Because the UE is simultaneously located within the coverage areas of the CC1 and the CC2, the access request message sent by the UE can be received by RNs under the CC1 and the CC2. It is assumed that the RNa and the RNb under the CC1 receive the access request message, and the RNc and the RNd under the CC2 receive the access request message.

The access request message may be a contention preamble or a dedicated preamble. For a detailed description, refer to other embodiments of the present invention. Details are not described herein again.

S603: An RN receiving the access request message sends the access request message to a corresponding CC.

Specifically, the RNa and the RNb send the received access request message to the CC1, and the RNc and the RNd send the received access request message to the CC2.

S604: The CC1 and the CC2 determine, based on the received access request message, an RN that is suitable for access by the UE.

Specifically, under the CC1 or the CC2, when there are more than two different RNs that can be accessed by the UE, the CC1 or the CC2 pre-selects, in a management range of the CC1 or the CC2, at least one RN that is suitable for access by the UE. For a specific method for the CC to select an RN or to determine an RN range, refer to related descriptions in other embodiments of the present invention. Details are not described herein again. It is assumed that the CC1 selects the RNa, and the CC2 selects the RNc.

S605: The CC1 and the CC2 separately send instruction information to the selected RNs, to instruct the RNs to perform feedback for the access request of the UE.

S606: The RNa and the RNc separately send access response messages to the UE.

S607: The UE selects, based on the access response messages of the RNa and the RNc, an RN to be finally accessed.

Specifically, the UE can determine, from the RNa and the RNc and based on content such as TA and RB allocation information carried in the RAR message, an RN that is suitable for access. For a specific method for the UE to determine an RN, refer to related descriptions in other embodiments of the present invention. Details are not described herein again. In this embodiment, it is assumed that the UE selects the RNa.

S608: The UE accesses the RNa.

Specifically, the UE can send a UE ID and a C-RAN ID to the RNa, to complete an access process. For a detailed description, refer to related content in other embodiments of the present invention. Details are not described herein again.

Optionally, the UE can determine, by detecting a signal condition of the source RN, whether to retain a connection to the source RN, where the signal condition includes signal quality and/or signal strength. For a specific process, refer to related descriptions in other embodiments of the present invention. Details are not described herein again.

Optionally, in another embodiment of the present invention, when UE receives an RAR message from only one RN, the UE can directly access the RN.

It can be understood that the CC1, the CC2, the RNa, and the RNb are only used as examples for description. A quantity of CCs to which the UE can be handed over, and a quantity of RBs managed by each CC are not limited in this embodiment of the present invention.

Optionally, in another embodiment of the present invention, in a macro/micro networking scenario, the steps executed by an RN in the embodiments shown in FIG. 4 to FIG. 6 may be executed by a small base station, and the steps executed by a CC are executed by a macro base station. For a specific procedure of the access method, refer to related descriptions in other embodiments of the present invention. Details are not described herein again. When the UE accesses a selected small base station, the UE sends the UE ID, a source cell (source cell) ID, and a target cell (selected cell) ID to the small base station, and the small base station reports the UE ID, the source cell ID, and the target cell ID to a macro base station that manages the small base station, to complete a handover procedure.

According to the access method provided in this embodiment of the present invention, the UE can be quickly handed over between access network devices managed by different control devices, ensuring a short handover period, and occupying a small quantity of resources.

In another implementation of the present invention, when the UE is handed over to a target access network device, the method further includes: receiving, by a target control device, a data status indication message from a source access network device, where the data status indication message includes a start number of a data packet that has not been transmitted between the UE and the source access network device.

The data status indication message may be used to instruct the target control device to manage data transmission of the UE, and may be specifically a sequence number status transfer (sequence number status transfer, SN status transfer) message. The data packet that has not been transmitted is an uplink data packet or a downlink data packet that waits for transmission after some data packets between the UE and the source access network device have been transmitted. The data packet is sequentially arranged after the data packets that have been transmitted, and can be identified by using a number. Relatively, the data packets that have been transmitted include an uplink data packet that is sent by the UE to the source access network device, and for which a feedback of the source access network device has been received; or a downlink data packet that is sent by the source access network device to the UE, and for which a feedback of the UE has been received.

Optionally, when the UE is handed over between access network devices managed by different control devices, the source access network device sends the data status indication message to a source control device, and then the source access network device sends the message to a target control device. After the target control device successively receives the message, the source control device initiates a data forwarding (data forwarding) process between the source control device and the target control device, including forwarding downlink data that has not been transmitted to the target control device, so that the target control device continues to send the downlink data to the UE based on a downlink data packet number in the data status indication message; or the target control device replaces the source control device to receive and process uplink data sent by the UE. Details are not described herein again. Optionally, if there is a direct communications interface between the source access network device and the target access network device, the source access network device can send the data status indication message to the target access network device, and the target access network device notifies the message to the target control device.

Optionally, if the UE is handed over between different access network devices under a same control device, that is, when the source control device and the target control device are a same control device, the target control device can directly receive the data status indication message sent by the source access network device and obtain a start number of a data packet that has not been transmitted, so as to continue data transmission with the UE. Alternatively, the source access network device can notify information about a data packet that has been transmitted between the source access network device and the UE to the target control device in a format that is recognizable by the target control device, so that the target control device can subsequent sends, to the target access network device, downlink data that is not sent.

Optionally, the data packet that has not been transmitted may be a to-be-transmitted PDCP packet or RLC packet, where there is a mapping relationship between the PDCP packet and the RLC packet, and the PDCP packet and the RLC packet indicate same source data. Specifically, it is assumed that an access network device has functions of an RLC layer or below (including the RLC layer), and a control device has functions of a PDCP layer or above (including the PDCP layer). The data status indication message that is obtained by the target control device from the source control device includes a start number of the to-be-transmitted PDCP packet. Alternatively, the data status indication message that is obtained by the target access network device from the source access network device includes a start number of the to-be-transmitted RLC packet, and the target access network device sends related information of the RLC packet to the target control device.

It can be understood that the data status indication message described in this embodiment is applicable to the access method described in any embodiment in FIG. 2 to FIG. 6. In other words, after the UE accesses the target access network device, that is, a first access network device, by using the access method described in any embodiment, the source access network device can initiate a process for transmitting the data status indication message, so that the target control device manages data transmission of the UE, maintaining service continuity after the UE handover.

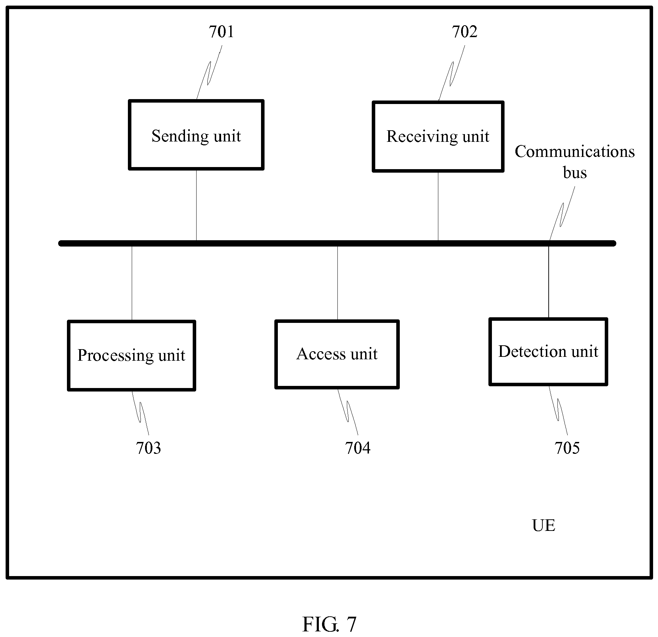

FIG. 7 is a schematic structural diagram of a UE according to an embodiment of the present invention. As shown in FIG. 7, the UE includes:
a sending unit 701, configured to send an access request message to at least one access network device;
a receiving unit 702, configured to receive an access response message sent by one or more of the at least one access network device for the access request message;
a processing unit 703, configured to determine, based on the access response message, a first access network device that is suitable for access by the UE, where the first access network device is one of the at least one access network device; and
an access unit 704, configured to enable the UE to access the first access network device.

Optionally, the access unit 704 may be further configured to instruct the sending unit 701 to send UE identification information to the first access network device, where the UE identification information includes at least one of an identifier of the UE, an identifier of the first access network device, and an identifier of a control device. For a detailed description of sending the UE identification information to the first access network device by the UE, refer to related content in other embodiments of the present invention. Details are not described herein again. Optionally, the processing unit 703 may be specifically configured to determine the first access network device based on resource block allocation information included in the access response message.

Optionally, the processing unit 703 may be specifically configured to determine the first access network device based on a TA included in the access response message.

For a detailed process of determining the first access network device by the processing unit 703, refer to related descriptions in other embodiments of the present invention. Details are not described herein again.

Optionally, the UE further includes a detection unit 705, configured to detect a signal condition of a source access network device. Correspondingly, the processing unit 703 may be further configured to, when the signal condition of the source access network device meets a preset condition, retain a connection to the source access network device; or when the signal condition of the source access network device does not meet the preset condition, break the connection to the source access network device. The source access network device means an access network device in which the UE currently resides or to which the UE is connected to.

Optionally, the access request message includes a dedicated preamble or a contention preamble. The dedicated preamble is used for a non-contention access process, and the contention preamble is used for a contention access process. For a detailed description, refer to related content in other embodiments of the present invention. Details are not described herein again.

Optionally, the processing unit 703 is further configured to determine, based on a determining condition, whether the UE needs to switch an access network device, where the determining condition includes at least one of the following: the signal condition of the source access network device of the UE, a signal condition of an access network device adjacent to the source access network device, a change of a geographical location of the UE, and a distance between the UE and each of the at least one access network device. For a detailed description of the determining condition and a determining process, refer to related content of other embodiments of the present invention. Details are not described herein again.

Optionally, the receiving unit 702 is specifically configured to receive access response messages sent by a plurality of access network devices that are managed by at least two control devices.

In another embodiment of the present invention, in hardware implementation, a function of the sending unit 701 may be executed by a transmitter, a function of the receiving unit 702 may be executed by a receiver, or functions of the sending unit 701 and the receiving unit 702 may be executed by a transceiver. The processing unit 703, the access unit 704, and the detection unit 705 may be combined into a function module, and may be embedded into or be independent of a processor of a base station in a hardware form, or may be stored in a memory of the UE in a software form, so that the processor invokes and executes operations corresponding to the foregoing units.

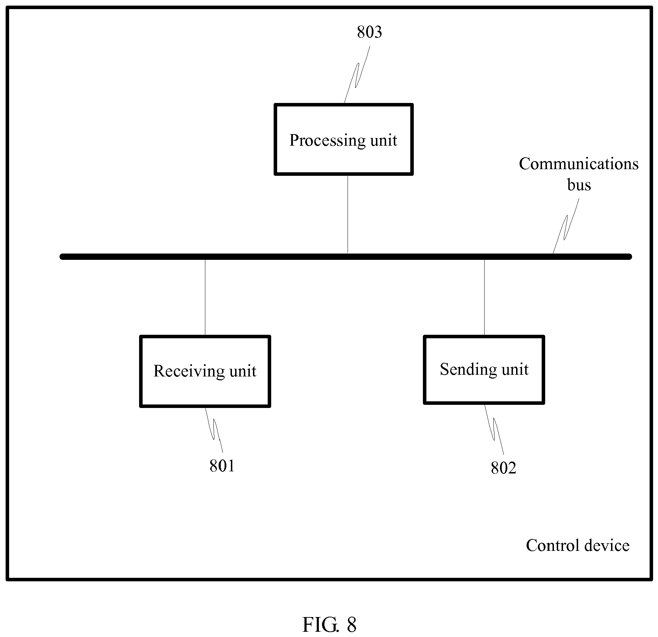

Correspondingly, as shown in FIG. 8, an embodiment of the present invention provides a control device. The control device includes:
a receiving unit 801, configured to receive an access request message sent by at least one access network device, where the at least one access network device is managed by the control device; and
a sending unit 802, configured to send an instruction message to one or more of the at least one access network device, to instruct the one or more access network devices to send an access response message to the UE, where the access response message is used by the UE to determine a first access network device that is suitable for access.

Optionally, the access request message includes a contention preamble. The control device may further include a processing unit 803, configured to, when the receiving unit 801 receives a same contention preamble from a plurality of user equipments, perform contention resolution for access requests of the plurality of user equipments, including determining a processing priority of the access requests of the plurality of user equipments. For a specific contention resolution manner and process, refer to related descriptions in other embodiments of the present invention. Details are not described herein again.

Optionally, the receiving unit 801 is further configured to receive a data status indication message from a source access network device, where the data status indication message includes a start number of a data packet that has not been transmitted between the UE and the source access network device. For a detailed description of the data status indication message, refer to related content of other embodiments of the present invention. Details are not described herein again.

In another embodiment of the present invention, in hardware implementation, a function of the receiving unit 801 may be executed by a receiver, a function of the sending unit 802 may be executed by a transmitter, or functions of the receiving unit 801 and the sending unit 802 may be executed by a communications module, and the communications module may support the control device in communicating with another network device, for example, an access network device. The processing unit 803 may be used as a function module and may be embedded into or be independent of a processor of the control device in a hardware form, or may be stored in a memory of a base station in a software form, so that the processor invokes and executes operations corresponding to the foregoing units.

According to the UE and the control device provided in this embodiment of the present invention, the UE determines the access network device that is suitable for access by the UE, avoiding signaling exchanges between the target access network device and the source access network device, reducing signaling exchanges between the UE and a network side, and thereby ensuring a short access time and saving network resources. Especially, if the access method provided in this embodiment of the present invention is used in a dense network scenario such as the C-RAN, the UE can be quickly handed over between different cells. This ensures a short handover period, reduces network loads, and improves overall network efficiency. In addition, the access network device selected by the UE meets a communications condition of the UE, and therefore, an access effect is good.

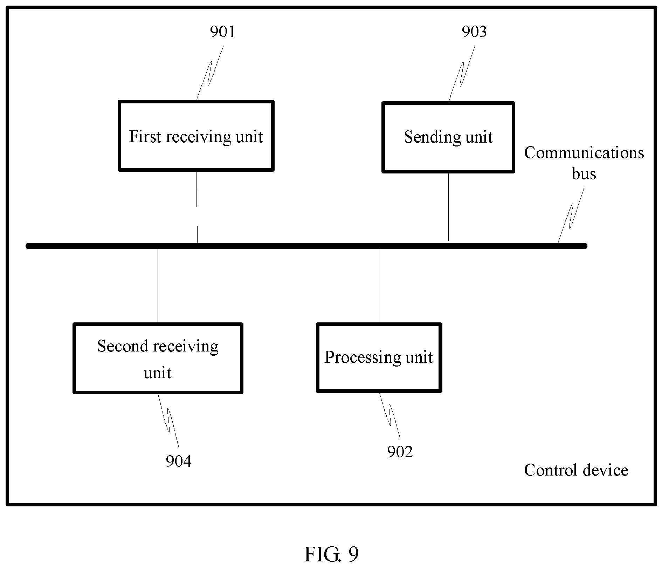

FIG. 9 is a schematic structural diagram of a control device according to an embodiment of the present invention. As shown in FIG. 9, the control device includes:
a first receiving unit 901, configured to receive an access request message sent by at least one access network device, where the at least one access network device is managed by the control device;
a processing unit 902, configured to determine, from the at least one access network device based on the access request message, a first access network device that is suitable for access by a user equipment UE; and
a sending unit 903, configured to send an instruction message to the first access network device, where the instruction message is used to instruct the first access network device to send an access response message to the UE.

Optionally, the processing unit 902 may be configured to determine the first access network device based on signal strength of the access request message.

Optionally, the processing unit 902 may be configured to obtain a distance between the UE and each of the at least one access network device, and determine the first access network device based on the distance. Specifically, the processing unit 902 may be configured to obtain sending delay information of the access request message, and determine the distance between the UE and the access network device based on the sending delay information.

Optionally, the processing unit 902 may be configured to obtain, from the access request message, a quantity of resources preallocated to the UE, and determine the first access network device based on the quantity of resources preallocated to the UE.

For a detailed process of determining the first access network device by the processing unit 902, refer to related descriptions in other embodiments of the present invention. Details are not described herein again.

Optionally, the control device further includes a second receiving unit 904, configured to receive a data status indication message from a source access network device, where the data status indication message includes a start number of a data packet that has not been transmitted between the UE and the source access network device. For a detailed description of the data status indication message, refer to related content of other embodiments of the present invention. Details are not described herein again.

Optionally, the access request message includes a dedicated preamble, and the dedicated preamble may be allocated to the UE by the access network device or the control device.

Optionally, the access request message includes a contention preamble, and the first receiving unit 901 is specifically configured to receive contention preambles sent by a plurality of access network devices, where the contention preambles are the same as contention preambles sent by a plurality of UEs. The processing unit 902 is further configured to perform contention resolution for access requests of the plurality of UEs. For a specific contention resolution manner and process, refer to related descriptions in other embodiments of the present invention. Details are not described herein again.

In another embodiment of the present invention, in hardware implementation, a function of the first receiving unit 901 may be executed by a receiver, a function of the sending unit 903 may be executed by a transmitter, or functions of the first receiving unit 901 and the sending unit 903 may be executed by a communications module, for example, a communications interface or a transceiver. The processing unit 902 may be embedded into or be independent of a processor of a base station in a hardware form, or may be stored in a memory of the base station in a software form, so that the processor invokes and executes operations corresponding to the foregoing units. It should be noted that when the control device further includes the second receiving unit 904, the second receiving unit 904 and the first receiving unit 901 may be implemented by a hardware apparatus having a receiving function, for example, an interface between the control device and the access network device; or may be two independent hardware apparatuses, for example, the first receiving unit 901 is an interface between the control device and the access network device, and the second receiving unit 904 is an interface between the control device and another control device.

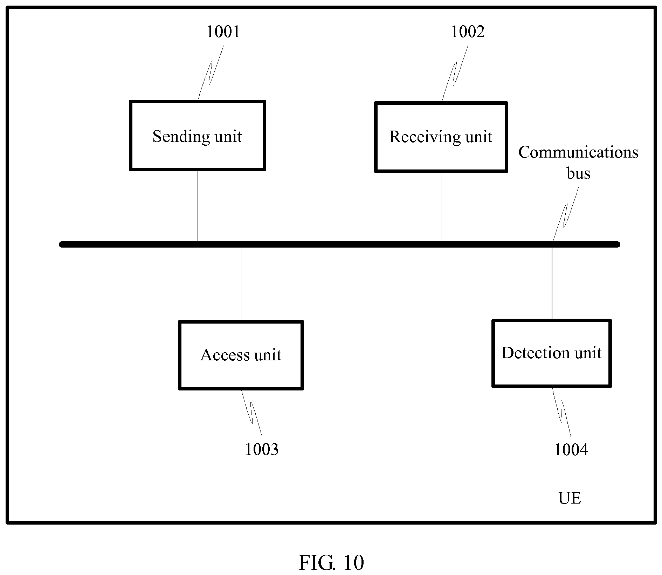

Correspondingly, as shown in FIG. 10, an embodiment of the present invention provides a UE. The UE includes a sending unit 1001, configured to send an access request message to at least one access network device, where the access request message is used, by a control device that manages the access network device, to determine a first access network device that is suitable for access by the UE, and the first access network device is one of the at least one access network device;
a receiving unit 1002, configured to receive an access response message sent by the first access network device; and
an access unit 1003, configured to enable the UE to access the first access network device.

Optionally, the UE further includes a detection unit 1004, configured to detect a signal condition of a source access network device, and when the signal condition of the source access network device meets a preset condition, retain a connection to the source access network device; or when the signal condition of the source access network device does not meet the preset condition, break the connection to the source access network device.

Optionally, the sending unit 1001 is further configured to send UE identification information to the first access network device, where the UE identification information includes at least one of an identifier of the UE, an identifier of the first access network device, and an identifier of the control device.

Optionally, the detection unit 1004 is further configured to determine, based on a determining condition, whether the UE needs to switch an access network device, where the determining condition may include at least one of the following: the signal condition of the source access network device, a signal condition of an access network device adjacent to the source access network device, a change of a geographical location of the UE, and a distance between the UE and each of the at least one access network device.

As shown in any one of FIG. 7 to FIG. 10, units of the control device or the UE may be connected to each other by using a communications bus. Not shown in the figures, the units of the devices may be alternatively connected in other connection manners. This is not specifically limited in this embodiment of the present invention.

In another embodiment of the present invention, in hardware implementation, a function of the sending unit 1001 may be executed by a transmitter, a function of the receiving unit 1002 may be executed by a receiver, or functions of the sending unit 1001 and the receiving unit 1002 may be executed by a transceiver. The access unit 1003 and the detection unit 1004 may be combined into a function module, and may be embedded into or be independent of a processor of the UE in a hardware form, or may be stored in a memory of a base station in a software form, so that the processor invokes and executes operations corresponding to the foregoing units.

According to the control device and the UE provided in this embodiment of the present invention, the control device determines the access network device that is suitable for access by the UE, avoiding signaling exchanges between a target access network device and the source access network device, reducing signaling exchanges between the UE and a network side, and thereby ensuring a short access time and saving network resources. Especially, if the access method provided in this embodiment of the present invention is used in a dense network scenario such as the C-RAN, the UE can be quickly handed over between different cells. This ensures a short handover period, reduces network loads, and improves overall network efficiency.

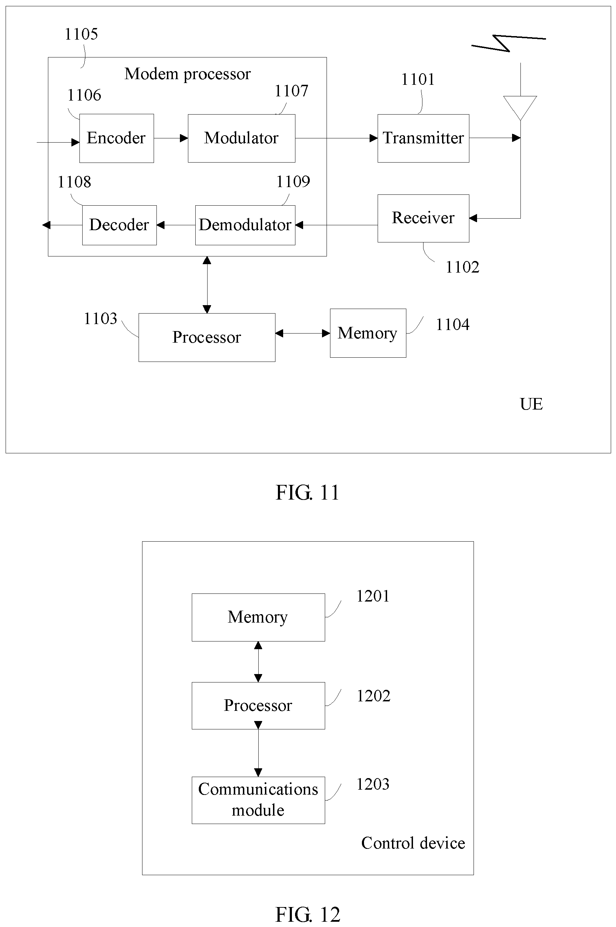

FIG. 11 is a simplified schematic diagram of a possible design structure of a UE in the foregoing embodiments. The UE includes a transmitter 1101, a receiver 1102, a processor 1103, a memory 1104, and a modem processor 1105.

The transmitter 1101 adjusts (for example, performs digital-to-analog conversion, filtering, amplification, and up-conversion on) an output sample and generates an uplink signal. The uplink signal is transmitted to the base station in the foregoing embodiments by using an antenna. On a downlink, an antenna receives a downlink signal transmitted by the base station in the foregoing embodiments. The receiver 1102 adjusts (for example, filters, amplifies, down-converts, and digitizes) the signal received from the antenna and provides an input sample. In the modem processor 1105, an encoder 1106 receives service data and a signaling message that are to be sent on an uplink, and processes (for example, formats, encodes, and interleaves) the service data and the signaling message. A modulator 1107 further processes (for example, performs symbol mapping and modulation on) encoded service data and an encoded signaling message, and provides an output sample. A demodulator 1109 processes (for example, demodulates) the input sample and provides symbol estimation. A decoder 1108 processes (for example, de-interleaves and decodes) the symbol estimation and provides the decoded data and signaling message to the UE. The encoder 1106, the modulator 1107, the demodulator 1109, and the decoder 1108 may be implemented by the combined modem processor 1105. These units perform processing according to a wireless access technology (for example, an access technology used by an LTE system and other evolved systems) used by a radio access network. The processor 1103 performs control management over an action of the UE, and is configured to execute processing performed by the UE in the foregoing embodiments. For example, the processor 1103 is configured to control the UE to determine a first access network device based on an access response message, and/or other processes of the technology described in the embodiments of the present invention, including the steps performed by the UE in FIG. 2 to FIG. 6. The memory 1104 is configured to store program code and data that are used for the UE.

FIG. 12 is a simplified schematic diagram of a possible design structure of a control device in the foregoing embodiments. The control device may be a CC in a C-RAN, or a macro base station in a macro/micro networking scenario.

The control device includes: a processor 1202, configured to perform control management over an action of the control device, and execute various functions to support communications services provided by the control device, for example, the processor 1202 is configured to support the control device in performing operations performed by the control device in FIG. 2 to FIG. 6, and/or other processes of the technology described in the specification; a memory 1201, configured to store program code and data of the device; and a communications module 1203, configured to support the control device in communicating with another network entity, for example, an access network device or another control device.

It can be understood that FIG. 12 shows only a simplified design of the control device. In actual application, the control device may include any quantities of transmitters, receivers, processors, controllers, memories, communications modules, and the like. Details are not described herein again.

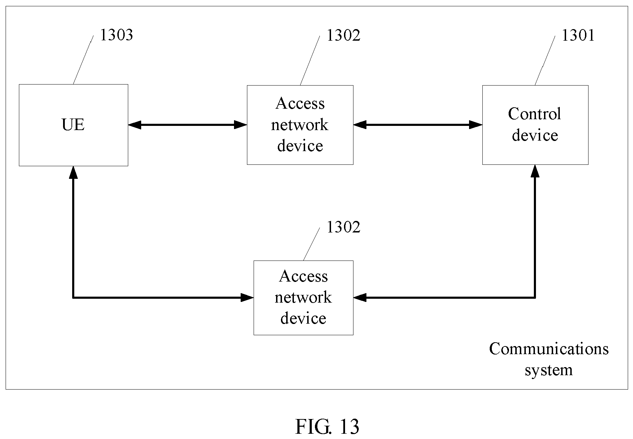

FIG. 13 is a schematic diagram of a communications system according to an embodiment of the present invention. The communications system includes a control device 1301, access network devices 1302, and a UE 1303.

It can be understood that the control device 1301 can manage at least one access network device. Two access network devices 1302 shown in the figure are used only as examples, and do not constitute any limitation on this embodiment of the present invention.

Optionally, the communications system may be a C-RAN, or a heterogeneous network of macro/micro networking.

The control device 1301 is configured to receive an access request message sent by the access network devices 1302, determine, based on the access request message, a first access network device that is suitable for access by the UE 1303, and send an instruction message to the first access network device, where the instruction message is used to instruct the first access network device to send an access response message to the UE 1303.

The access network devices 1302 are configured to receive the access request message sent by the UE 1303, and send the message to the control device 1301.

The control device 1301 may be the control device in the embodiment shown in FIG. 9, and the UE 1303 may be the UE 1303 in the embodiment shown in FIG. 10.

In another embodiment of the present invention, the control device 1301 may be configured to receive an access request message sent by at least one access network device, where the access request message is used by the UE 1303 to initiate an access process to the at least one access network device; and send an instruction message to one or more of the at least one access network device, to instruct the one or more access network devices to send an access response message to the UE 1303, where the access response message is used by the UE 1303 to determine the first access network device that is suitable for access.

The access network devices 1302 are configured to send the access request message of the UE 1303 to the control device 1301, and send the access response messages to the UE 1303 based on an instruction of the control device 1301. The UE 1303 can determine a to-be-accessed access network device based on the received access response messages.

In this embodiment, the control device 1301 may be the control device in the embodiment shown in FIG. 8, and the UE 1303 may be the UE in the embodiment shown in FIG. 7.

For a detailed description of functions of the devices in the communications system, refer to related content in other embodiments of the present invention, for example, the descriptions in the embodiments shown in FIG. 2 to FIG. 6. Details are not described herein again.

By using the communications system provided in this embodiment of the present invention, the UE can be quickly handed over between different access network devices. This ensures a short handover period, reduces network loads, and improves overall network efficiency.

It may be understood that, a processor used by the control device or the UE in the embodiments of the present invention may be a central processing unit (CPU), a general-purpose processor, a digital signal processor (DSP), an application-specific integrated circuit (ASIC), a field programmable gate array (FPGA) or another programmable logic device, a transistor logic device, a hardware component, or any combination thereof. The processor can implement or execute various example logical blocks, modules, and circuits that are described with reference to the content disclosed in the present invention. The processor may also be a combination of computing functions, for example, a combination of one or more microprocessors or a combination of a DSP and a microprocessor.

A person skilled in the art may clearly understand that, descriptions of the embodiments provided by the present invention may be reference for each other. For ease and brevity of description, for example, for functions of the apparatuses and devices and performed steps that are provided in the embodiments of the present invention, refer to related descriptions in the method embodiments of the present invention.

The methods or algorithm steps described with reference to the content disclosed in the present invention may be implemented in a hardware manner, or may be implemented in a manner of executing a software instruction by a processor. The software instruction may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other forms well-known in the art. A storage medium used as an example is coupled to the processor, so that the processor can read information from the storage medium, and can write information into the storage medium. Certainly, the storage medium may be a component of the processor. The processor and the storage medium may be located in an ASIC. In addition, the ASIC may be located in user equipment. Certainly, the processor and the storage medium may exist in the user equipment as discrete components.

In the embodiments of the present invention, the disclosed system, device and method may be implemented in other modes without departing from the scope of the present invention. For example, the described embodiment is merely an example. For example, the module or unit division is merely logical function division and may be other division in actual implementation. For example, a plurality of units or components may be combined or integrated into another system, or some features may be ignored or not performed. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. A person of ordinary skill in the art may understand and implement the embodiments of this application without creative efforts.

In addition, the schematic diagrams illustrating the system, device, method and different embodiments may be combined or integrated with other systems, modules, technologies or methods without departing from the scope of the present invention. In addition, the displayed or discussed mutual couplings or direct couplings or communication connections may be implemented through some interfaces. The indirect couplings or communication connections between the apparatuses or units may be implemented in electronic, mechanic, or other forms.

The descriptions are only specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An access method, comprising:
sending, by a user equipment UE, an access request message to at least one access network device;
receiving, by the UE, an access response message sent by one or more of the at least one access network device for the access request message;
determining, by the UE based on the access response message, a first access network device that is suitable for access by the UE, wherein the first access network device is one of the at least one access network device; and
accessing, by the UE, the first access network device.

2. The method according to claim 1, wherein the accessing, by the UE, the first access network device comprises:
sending, by the UE, UE identification information to the first access network device, wherein the UE identification information comprises at least one of an identifier of the UE, an identifier of the first access network device, and an identifier of the control device.

3. The method according to claim 1 or 2, wherein the method further comprises:
detecting, by the UE, a signal condition of a source access network device; and
when the signal condition of the source access network device meets a preset condition, retaining, by the UE, a connection to the source access network device; or when the signal condition of the source access network device does not meet the preset condition, breaking, by the UE, the connection to the source access network device.

4. The method according to any one of claims 1 to 3, wherein the access request message comprises a dedicated preamble or a contention preamble, wherein the dedicated preamble or the contention preamble is allocated to the UE by the at least one access network device or the control device.

5. The method according to any one of claims 1 to 4, wherein
the receiving, by the UE, an access response message sent by one or more of the at least one access network device comprises:
receiving, by the UE, access response messages sent by a plurality of access network devices that are managed by at least two control devices.

6. The method according to any one of claims 1 to 5, wherein before the sending, by UE, an access request message to at least one access network device, the method further comprises:
determining, by the UE based on a determining condition, whether an access network device needs to be switched; wherein
the determining condition comprises at least one of the following: the signal condition of the source access network device of the UE, a signal condition of an access network device adjacent to the source access network device, a change of a geographical location of the UE, and a distance between the UE and each of the at least one access network device.

7. A user equipment UE, comprising:
a sending unit, configured to send an access request message to at least one access network device;
a receiving unit, configured to receive an access response message sent by one or more of the at least one access network device for the access request message;
a processing unit, configured to determine, based on the access response message, a first access network device that is suitable for access by the UE, wherein the first access network device is one of the at least one access network device; and
an access unit, configured to enable the UE to access the first access network device.

8. The UE according to claim 7, wherein the access unit is further configured to instruct the sending unit to send UE identification information to the first access network device, wherein the UE identification information comprises at least one of an identifier of the UE, an identifier of the first access network device, and an identifier of the control device.

9. The UE according to claim 7 or 8, wherein the UE further comprises a detection unit, configured to detect a signal condition of a source access network device of the UE; and
the processing unit is further configured to retain a connection to the source access network device when the signal condition of the source access network device meets a preset condition; or the processing unit is further configured to break the connection to the source access network device when the signal condition of the source access network device does not meet the preset condition.

10. The UE according to any one of claims 7 to 9, wherein the access request message comprises a dedicated preamble or a contention preamble, wherein the dedicated preamble or the contention preamble is allocated to the UE by the at least one access network device or the control device.

11. The UE according to any one of claims 7 to 10, wherein the processing unit is further configured to determine, based on a determining condition, whether the UE needs to switch an access network device that is accessed; wherein
the determining condition comprises at least one of the following: the signal condition of the source access network device of the UE, a signal condition of an access network device adjacent to the source access network device, a change of a geographical location of the UE, and a distance between the UE and each of the at least one access network device.

12. The UE according to any one of claims 7 to 11, wherein
the receiving unit is specifically configured to: receive access response messages sent by a plurality of access network devices that are managed by at least two control devices.

13. An access method, comprising:
receiving, by a control device, an access request message sent by at least one access network device, wherein the control device manages the at least one access network device;
determining, by the control device from the at least one access network device based on the access request message, a first access network device that is suitable for access by a user equipment UE; and
sending, by the control device, an instruction message to the first access network device, wherein the instruction message is used to instruct the first access network device to send an access response message to the UE.

14. The method according to claim 13, wherein the determining, by the control device from the at least one access network device, a first access network device that is suitable for access by UE comprises:
determining, by the control device, the first access network device based on a signal condition of the access request message.

15. The method according to claim 13, wherein the determining, by the control device from the at least one access network device, a first access network device that is suitable for access by UE comprises:
obtaining, by the control device, a distance between the UE and each of the at least one access network device; and
determining, by the control device, the first access network device based on the distance.

16. The method according to claim 15, wherein the obtaining, by the control device, a distance between the UE and each of the at least one access network device comprises:
obtaining, by the control device, sending delay information of the access request message; and
determining, by the control device, the distance between the UE and the access network device based on the sending delay information.

17. The method according to claim 13, wherein the determining, by the control device based on the access request message, a first access network device that is suitable for access by UE comprises:
obtaining, by the control device from the access request message, a quantity of resources preallocated to the UE; and
determining, by the control device, the first access network device based on the quantity of resources preallocated to the UE.

18. The method according to any one of claims 13 to 17, wherein the method further comprises:
receiving, by the control device, a data status indication message from a source access network device, wherein the data status indication message comprises a start number of a data packet that has not been transmitted between the UE and the source access network device.

19. The method according to any one of claims 13 to 18, wherein the access request message comprises a dedicated preamble, wherein the dedicated preamble or the contention preamble is allocated to the UE by the at least one access network device or the control device.

20. The method according to any one of claims 13 to 19, wherein
the access request message comprises a contention preamble; and
the receiving, by a control device, an access request message sent by at least one access network device comprises:
receiving, by the control device, contention preambles sent by a plurality of access network devices, wherein the contention preambles are the same as contention preambles sent by a plurality of UEs; and
the method further comprises: performing, by the control device, contention resolution for access requests of the plurality of UEs.

21. A control device, comprising:
a first receiving unit, configured to receive an access request message sent by at least one access network device, wherein the control device manages the at least one access network device;
a processing unit, configured to determine, from the at least one access network device based on the access request message, a first access network device that is suitable for access by a user equipment UE; and
a sending unit, configured to send an instruction message to the first access network device, wherein the instruction message is used to instruct the first access network device to send an access response message to the UE.

22. The control device according to claim 21, wherein the processing unit is specifically configured to determine the first access network device based on a signal condition of the access request message.

23. The control device according to claim 21, wherein the processing unit is specifically configured to obtain a distance between the UE and each of the at least one access network device, and determine the first access network device based on the distance.

24. The control device according to claim 23, wherein the processing unit is specifically configured to obtain sending delay information of the access request message, and determine the distance between the UE and the access network device based on the sending delay information.

25. The control device according to claim 21, wherein the processing unit is specifically configured to obtain, from the access request message, a quantity of resources preallocated to the UE, and determine the first access network device based on the quantity of resources preallocated to the UE.

26. The control device according to any one of claims 21 to 25, further comprising:
a second receiving unit, configured to receive a data status indication message from a source access network device, wherein the data status indication message comprises a start number of a data packet that has not been transmitted between the UE and the source access network device.

27. The control device according to any one of claims 21 to 26, wherein the access request message comprises a dedicated preamble, wherein the dedicated preamble or the contention preamble is allocated to the UE by the at least one access network device or the control device.

28. The control device according to any one of claims 21 to 27, wherein
the access request message comprises a contention preamble; and
the receiving unit is specifically configured to receive contention preambles sent by a plurality of access network devices, wherein the contention preambles are the same as contention preambles sent by a plurality of UEs; and
the processing unit is further configured to perform contention resolution for access requests of the plurality of UEs.
